# EUROPEAN PATENT APPLICATION

(11) **EP 4 722 799 A1**
(43) Date of publication of application: **08.04.2026**
(21) Application number: 24815166.4
(22) Date of filing: 13.05.2024
(51) Int. Cl.: G02F 1/1335, G02F 1/1333, G02F 1/13357

(54) **DISPLAY DEVICE, ELECTRONIC DEVICE, TIMEPIECE, AND METHOD FOR MANUFACTURING DISPLAY DEVICE**

(30) Priority: 31.05.2023 JP 2023089623
(71) Applicant: Casio Computer Co., Ltd., Tokyo 151-8543 (JP)
(72) Inventor: IKEDA Daisuke, Hamura-shi, Tokyo 205-8555 (JP); NAMIKI Koji, Hamura-shi, Tokyo 205-8555 (JP)
(74) Representative: Grünecker Patent- und Rechtsanwälte PartG mbB
(86) International application number: PCT/JP2024/017591
(87) International publication number: WO 2024/247682

(57) **Abstract**

A display device (1) is provided with a transmissive liquid crystal panel (2) including a liquid crystal layer (20) in which a liquid crystal material (21) is sandwiched between transparent electrodes, an upper polarizing plate (25) disposed on a viewing side of the liquid crystal layer (20), and a lower polarizing plate (26) disposed on a non-viewing side of the liquid crystal layer (20). A film (3) having a moth-eye structure is disposed on the non-viewing side surface of the lower polarizing plate (26) disposed on the non-viewing side of the liquid crystal layer (20).

## Description

### TECHNICAL FIELD

The present invention relates to a display device, an electronic apparatus, a timepiece, and a method for manufacturing the display device.

### BACKGROUND ART

In the related art, as a module (electronic apparatus) of a timepiece or the like, a module including a skeleton-type display device configured to allow internal visibility is known.

For example, Patent Literature 1 describes a timepiece that includes a liquid crystal display element above hands (a short hand and a long hand in Patent Literature 1) that display time in an analog manner, and in which movement or the like of the hands disposed below (on a non-viewing side of) the liquid crystal display element can be observed through the liquid crystal display element by appropriately setting the liquid crystal display element to a transparent state.

### CITATION LIST

### PATENT LITERATURE

Patent Literature 1: JP2021-148565A

### SUMMARY OF INVENTION

### TECHNICAL PROBLEM

However, the related art as described in Patent Literature 1 merely enables visibility of a structure disposed below (on the non-viewing side of) the liquid crystal display element visible, and does not sufficiently take into consideration transmittance, visibility, and the like.

The present invention has been made to solve the above problems, and an object thereof is to provide a display device, an electronic apparatus, a timepiece, and a method for manufacturing the display device, which can improve visibility of an internal structure disposed below a liquid crystal panel when a transmissive liquid crystal panel is provided.

### SOLUTION TO PROBLEM

In order to solve the above-described problems, a display device according to the present invention including:
a transmissive liquid crystal panel including a liquid crystal layer in which a liquid crystal material is sandwiched between transparent electrodes, an upper polarizing plate disposed on a viewing side of the liquid crystal layer, and a lower polarizing plate disposed on a non-viewing side of the liquid crystal layer,
in which a film having a moth-eye structure is disposed on a non-viewing side surface of the lower polarizing plate.

### ADVANTAGEOUS EFFECTS OF INVENTION

According to the present invention, when a transmissive liquid crystal panel is provided, visibility of an internal structure disposed below the liquid crystal panel can be improved.

### BRIEF DESCRIPTION OF DRAWINGS

[FIG. 1] FIG. 1 is a front view of a timepiece according to an embodiment.
[FIG. 2] FIG. 2 is an exploded perspective view of main parts of a module according to the embodiment.
[FIG. 3] FIG. 3 is a schematic cross-sectional view of the main parts of the module according to the embodiment.
[FIG. 4] FIG. 4 is a schematic side view of main parts of a liquid crystal panel.
[FIG. 5] FIG. 5 is a perspective view schematically illustrating a sheet roll around which a sheet including films having a moth-eye structure is wound according to the embodiment.
[FIG. 6] FIG. 6 is a plan view illustrating a single film cut out from the sheet illustrated in FIG. 5.
[FIG. 7] FIG. 7 is a plan view of a backlight unit according to the embodiment.
[FIG. 8] FIG. 8 is a schematic cross-sectional view of a portion of a substrate according to the embodiment.
[FIG. 9] FIG. 9 is a schematic cross-sectional view of a portion of a substrate in the related art.
[FIG. 10] FIG. 10 is a schematic plan view illustrating a modification of the liquid crystal panel according to the embodiment.

### DESCRIPTION OF EMBODIMENTS

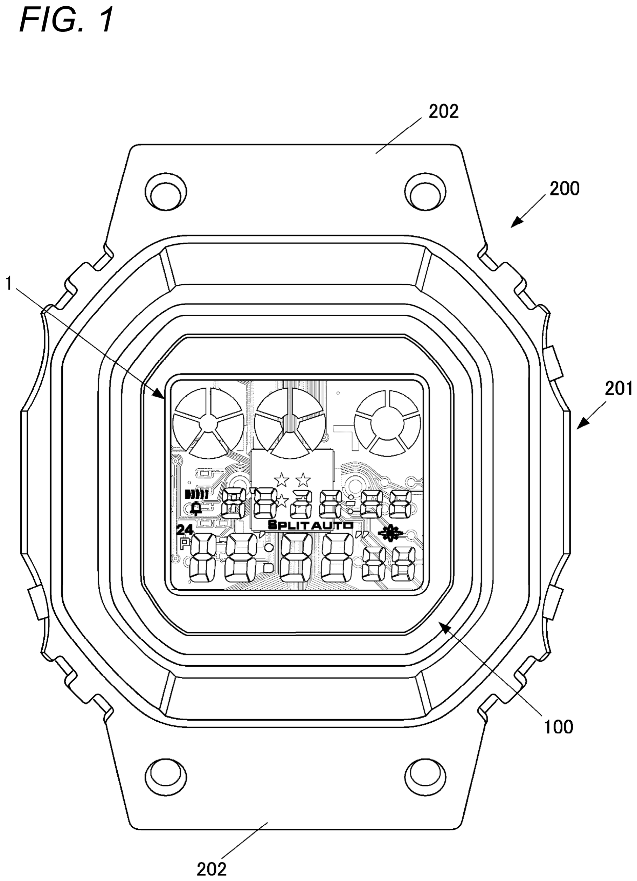

An embodiment of a display device, an electronic apparatus, a timepiece, and a method for manufacturing the display device according to the invention will be described with reference to FIGS. 1 to 9. In the present embodiment, a case where the electronic apparatus is a module 100 provided in a timepiece 200 (a wristwatch in the illustrated example) will be described as an example, and a case where a display device 1 is provided in the module 100 will be described as an example.

It should be noted that although the embodiments described below are provided with various limitations that are technically preferable for carrying out the present invention, the scope of the present invention is not limited to the following embodiments and illustrated examples.

### [Configuration]

FIG. 1 is a front view of the timepiece according to the present embodiment.

As illustrated in FIG. 1, the timepiece 200 according to the present embodiment includes an exterior case 201 and the module 100 that is the electronic apparatus accommodated in the exterior case 201.

The exterior case 201 is made of, for example, a relatively hard synthetic resin such as biomass plastic, engineering plastic, or super engineering plastic, or a metal material such as titanium or stainless steel (SUS). The material forming a main body case is not limited to those exemplified here. For example, the exterior case 201 may be made of various ceramics.

A pair of band attachment portions 202 to which a band (not illustrated) is attached are provided at upper and lower positions (a 12 o'clock position and a 6 o'clock position in an analog timepiece) of an outer side surface of the exterior case 201 in FIG. 1.

Although not illustrated, on left and right sides and the like of the exterior case 201 in FIG. 1, various operation buttons (push buttons, crowns, and the like) for a user to perform various input operations are provided. An exterior component such as a bezel may be attached to the exterior case 201.

The exterior case 201 is formed in a hollow short cylindrical shape in which at least an upper portion in a thickness direction (a viewing side or a front surface side of the timepiece) is open, and the internal hollow portion forms a storage space for storing the module 100 that is the electronic apparatus according to the present embodiment or the like.

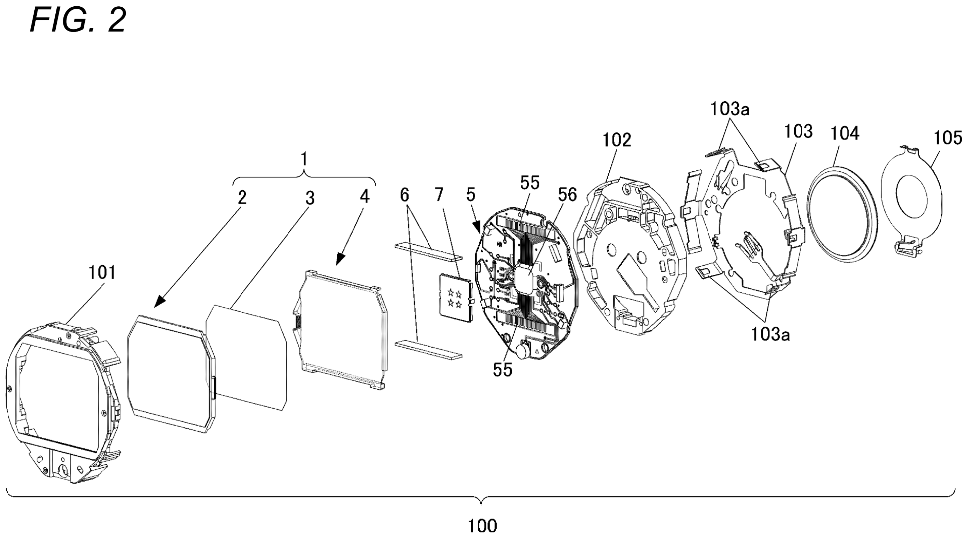

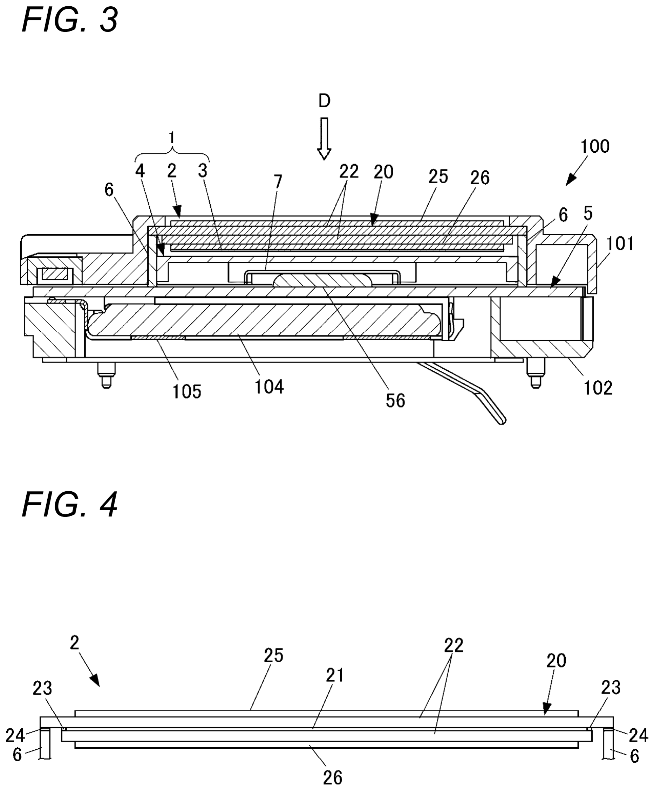

FIG. 2 is an exploded perspective view of main parts of a module provided in the timepiece illustrated in FIG. 1, and FIG. 3 is a schematic cross-sectional view of the main parts of the module illustrated in FIG. 2. Hereinafter, a direction in which the timepiece 200 provided with the display device 1 to be described later is viewed (a direction from top to bottom in FIG. 3, indicated by a white arrow in the drawing) is referred to as a "viewing direction D". In the following description, the viewing side (the front surface side) is an upper side in the viewing direction D in FIG. 3, and the non-viewing side (back surface side) is a lower side in the viewing direction D.

The module 100 according to the present embodiment includes the display device 1, a substrate 5, and the like.

Specifically, as illustrated in FIG. 2, the module 100 includes a first housing 101 and a second housing 102. The first housing 101 and the second housing 102 are made of, for example, various synthetic resins, and are each formed in a substantially disk shape.

As illustrated in FIGS. 2 and 3, the display device 1, the substrate 5, and the like are sandwiched between the first housing 101 and the second housing 102.

In the present embodiment, a substrate pressing member 103 is disposed on a back surface side (a lower side in FIG. 3, a side that is the non-viewing side when the module 100 is incorporated into the exterior case 201 of the timepiece 200) of the second housing 102. The substrate pressing member 103 includes locking claw portions 103a, each erected toward the viewing side of the timepiece 200. After the first housing 101 and the second housing 102 are fitted to each other in a state in which the display device 1, the substrate 5, and the like are sandwiched therebetween, the locking claw portions 103a are locked to the first housing 101 by attaching the substrate pressing member 103, and the first housing 101, the second housing 102, the display device 1, the substrate 5, and the like are integrated.

A battery 104 such as a button battery is disposed on the back surface side of the second housing 102, and the battery 104 is locked at a predetermined position by attaching a battery pressing member 105.

The display device 1 according to the present embodiment includes a liquid crystal panel 2, a backlight unit 4, and the like, and displays time, various kinds of information, and the like by partially blocking or transmitting light from the backlight unit 4.

More specifically, the display device 1 has the following configuration.

FIG. 4 is a schematic side view illustrating a liquid crystal panel of the display device illustrated in FIG. 3.

As illustrated in FIG. 4, the liquid crystal panel 2 includes a liquid crystal layer 20 in which a transparent liquid crystal material (liquid crystal composition) 21 is sandwiched between two transparent substrates 22. In the liquid crystal layer 20, a sealant 23 is provided around the liquid crystal material 21. Accordingly, the liquid crystal material 21 sandwiched between the two transparent substrates 22 is sealed by the sealant 23, so that the liquid crystal material 21 does not leak out.

A transparent electrode (not illustrated) is formed on an entire inner surface of each transparent substrate 22, and the liquid crystal material 21 is sandwiched between the transparent electrodes. Connection portions 24 of the transparent electrode are exposed at respective ends of the transparent substrate 22. One end side of a connector member 6 is connected to the connection portion 24. The other end side of the connector member 6 is electrically connected to a connection terminal portion 55 of the substrate 5 to be described later.

Although not illustrated, an alignment film made of, for example, a polyimide material is disposed on an inner side of the transparent electrode on each of the two transparent substrates 22, and an alignment state of the liquid crystal material 21 can be switched according to a voltage applied to the transparent electrode.

As illustrated in FIG. 2, the liquid crystal panel 2 is provided with a lighting pattern portion (not illustrated) in which a predetermined display of time, date, or the like is performed when a voltage is applied to the transparent electrode. By switching the alignment state of the liquid crystal material 21, a number or the like indicating an appropriate time is displayed in the lighting pattern portion.

An upper polarizing plate 25 is disposed on a viewing side (the upper side in FIG. 3) of the liquid crystal layer 20, and a lower polarizing plate 26 is disposed on a non-viewing side (the lower side in FIG. 3) of the liquid crystal layer 20.

In this way, the liquid crystal panel 2 has a configuration in which the liquid crystal layer 20 is sandwiched between two polarizing plates arranged upper and lower (the upper polarizing plate 25 and the lower polarizing plate 26).

A color tone of the lighting pattern portion to be lit and displayed on the liquid crystal panel 2 can be selected depending on what is used as the lower polarizing plate 26.

In the present embodiment, an "iodine-based transmissive polarizing plate" is used as the lower polarizing plate 26 in order to implement both transmittance of a background and display contrast on the liquid crystal panel 2. By using the "iodine-based transmissive polarizing plate" as the lower polarizing plate 26, the color tone of the lighting pattern portion to be lit and displayed on the liquid crystal panel 2 can be made black, and the background can be made transparent.

In the present embodiment, a film 3 is disposed on a non-viewing side (the lower side and the back surface side in FIG. 3) surface of the lower polarizing plate 26. The film 3 is a film having a moth-eye structure.

The film having the moth-eye structure is a film having a surface structure that imitates a fine protrusion structure of an eye of a moth (moth-eye). Specifically, for example, small protrusions having a height of about several 100 nm are formed at a period (pitch) of about 100 nm, so that a continuous uneven shape is formed on a surface of the film 3. As the film 3 having the moth-eye structure, for example, a Mosmite (registered trademark) film can be used.

Since the film 3 has such a fine protrusion structure (moth-eye structure), when light is incident on the film 3, reflection can be prevented by a birefringence effect of continuously changing a refractive index of the film 3. Therefore, a film having the moth-eye structure is generally used as an anti-reflection film.

In addition, another feature of the film 3 resulting from the fine protrusion structure (moth-eye structure) is that a change direction becomes a random direction close to that of natural light when linearly polarized light passes through the film 3.

The film 3 having the moth-eye structure is cut out from a sheet 30 wound in a roll shape by punching according to a shape of an object (the lower polarizing plate 26 in the present embodiment) to be placed.

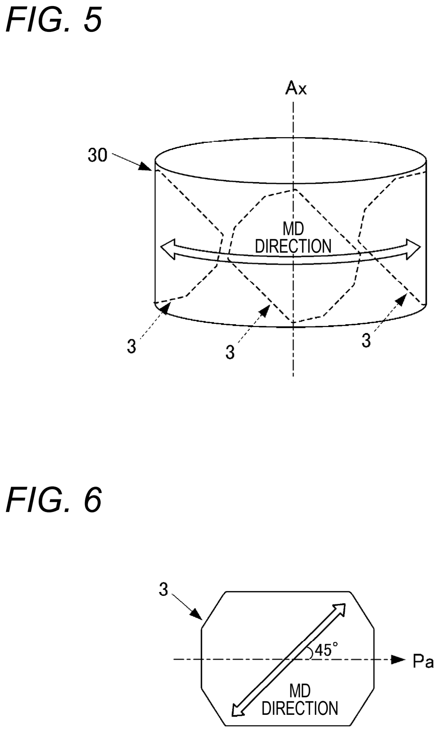

FIG. 5 is a perspective view schematically illustrating a sheet roll around which a sheet including the films having the moth-eye structure is wound. In FIG. 5, an arrangement example of the film 3 when the film 3 is cut out from the sheet 30 is indicated by broken lines. In FIG. 5, a rotational center axis of the sheet roll (roll-shaped sheet 30) is denoted by "Ax". The sheet 30 is generated while being stretched in a stretching direction (Machine Direction, referred to as an absorption axis direction in the present embodiment, or an "MD direction" in FIG. 5 and the like) along a circumferential direction of the roll, which is normally orthogonal to the rotational center axis Ax.

FIG. 6 is a plan view illustrating a single film cut out from the sheet illustrated in FIG. 5.

In the present embodiment, the film 3 having the moth-eye structure is disposed on the non-viewing side (the lower side and the back surface side in FIG. 3) surface of the lower polarizing plate 26 such that the MD direction of the film 3 during sheet manufacturing is oriented at 45 degrees with respect to a polarizing axis ("Pa" in FIG. 6) of the upper polarizing plate 25.

In addition, as illustrated in FIG. 2 and the like, the backlight unit 4 is provided on a non-viewing side of the liquid crystal panel 2 (a lower side/back surface side of the display device 1).

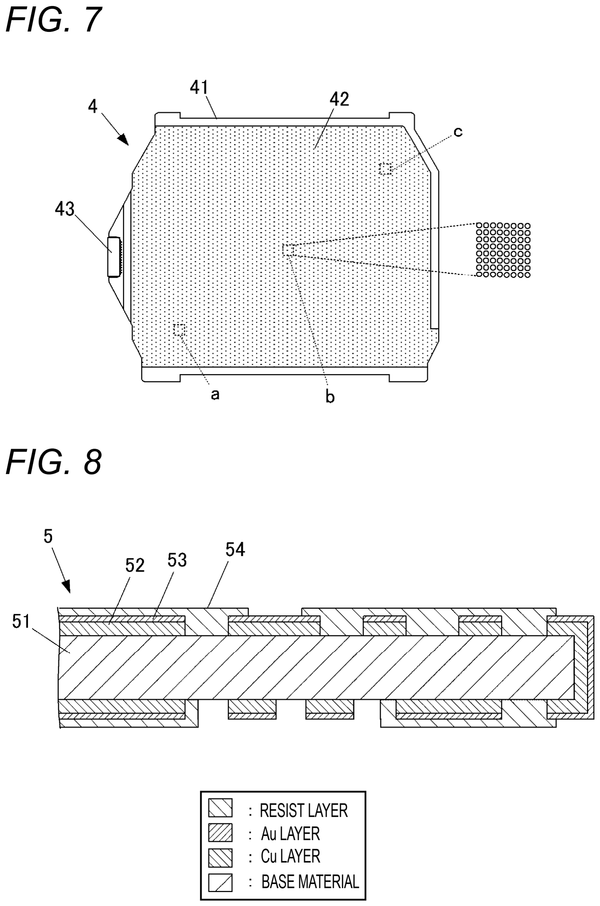

FIG. 7 is a plan view illustrating a backlight unit.

As illustrated in FIG. 7, the backlight unit 4 includes a frame 41, a light guide plate 42 fitted in the frame 41, and a light source 43.

The frame 41 is a frame body formed in a shape corresponding to a shape of the liquid crystal panel 2, and holds the light guide plate 42. The light guide plate 42 is formed by injection molding a transparent resin material (polycarbonate or the like), for example. The light source 43 is disposed at one end (a left side portion in the illustrated example) of the frame 41. The light source 43 is, for example, an LED.

The light guide plate 42 is a plate-shaped member having a shape corresponding to substantially the entire surface of the liquid crystal panel 2. A dot pattern is formed on an entire surface of the light guide plate 42. A method of forming the dot pattern on the light guide plate 42 is not particularly limited. For example, the dot pattern may be molded when the light guide plate 42 is molded, or the dot pattern may be formed by laser processing or the like after the light guide plate 42 is injection molded into a plate shape.

Since the dot pattern is formed on the light guide plate 42, light incident on the light guide plate 42 from the light source 43 is randomly reflected and diffused, and the light guide plate 42 emits light across its entire surface. The light from the backlight unit 4 is incident on the liquid crystal panel 2 as surface-emitted light (backlight light).

In the light guide plate 42 in the related art, arrangement of dots varies in density depending on the location such that the dot pattern is formed sparsely near the light source 43 to obtain a sufficient amount of light, and the dot pattern is formed densely farther from the light source 43 to sufficiently diffuse even a small amount of light and ensure brightness.

In contrast, in the light guide plate 42 according to the present embodiment, a substantially uniform dot pattern is formed regardless of a distance from the light source 43.

Specifically, the size of dots forming the dot pattern is maintained at the same level as in the related art, and the dots are formed at a substantially uniform pitch as a whole.

That is, the dot pattern of the light guide plate 42 according to the present embodiment is appropriately adjusted such that the entire dot pattern is substantially uniform with a moderate degree of dot distribution randomness when the density of the dot is set depending on the distance from the light source 43 as in an example in the related art.

In FIG. 7, a dot pattern example is schematically illustrated outside the frame 41 by enlarging a region b of the light guide plate 42. In the light guide plate 42 according to the present embodiment, the dot patterns when enlarged in a portion closer to the light source 43 than the region b (a portion indicated as a region a in FIG. 7) and a portion farther from the light source 43 than the region b (a portion indicated as a region c in FIG. 7) are the same as that in the region b.

That is, in the present embodiment, in the region a, which is close to the light source 43, of the light guide plate 42, the dots are slightly denser than in the related art, and in the region c, which is far from the light source 43, of the light guide plate 42, the dots are slightly sparser than in the related art.

In the related art, when the liquid crystal panel is not a transmissive liquid crystal panel, as described above, the dots are sparser in a region closer to the light source 43, and the dots are denser in a region farther from the light source 43 in the light guide plate 42. However, in the transmissive liquid crystal panel 2 as in the present embodiment, there is a problem that the dot pattern of the light guide plate 42 creates a frosted-glass appearance, causing the substrate 5 to appear blurred. That is, in the transmissive liquid crystal panel 2 as in the present embodiment, it means that substrate transmittance of the display unit is uneven. Therefore, regarding the dot pattern, a dot size is maintained while adopting a uniform pitch, thereby reducing a dot density and improving the transmittance of a light guide plate as compared with the related art.

Various electronic components (not illustrated) for the timepiece 200 to perform various operations are mounted on the substrate 5. The substrate 5 has wiring patterns 52 for connecting these electronic components, electrodes, and the like. Examples of the electronic components include a main IC (integrated circuit) 56 such as a microcomputer, an external storage unit (such as a flash memory), a large-capacity capacitor, a timepiece module related to various functional operations such as communication and measurement, and a crystal oscillator.

The substrate 5 is supplied with power from the battery 104 to operate the electronic components and the like. For example, the main IC56 counts the time (which may include date information) using a clock signal corresponding to oscillation of the crystal oscillator. In addition, the main IC 56 causes a display screen of the liquid crystal panel 2 of the display device 1 to display the time and the like. The substrate 5 may be a laminated substrate having a plurality of layers.

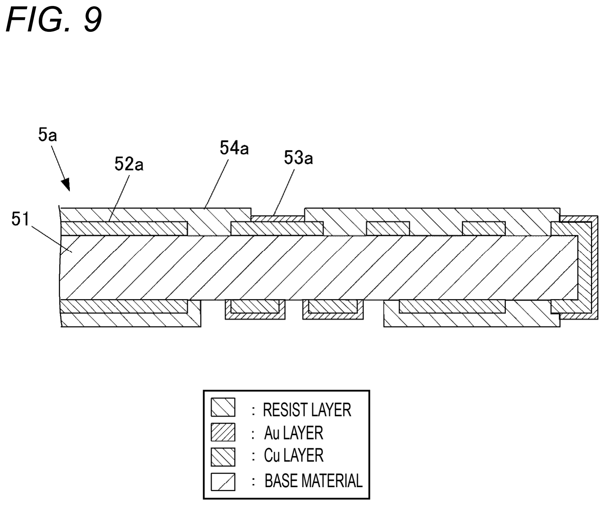

FIG. 8 is a schematic cross-sectional view of a portion of a substrate according to the embodiment, and FIG. 9 is a schematic cross-sectional view of a portion of a substrate in the related art.

As illustrated in FIGS. 8 and 9, substrates 5, 5a have wiring patterns 52, 52a made of copper (Cu) foil on a surface of a base material 51, respectively. In addition, resist layers 54, 54a are provided on the substrates 5, 5a as insulating layers in order to prevent a short circuit between the wiring patterns 52, 52a, respectively.

As illustrated in FIG. 9, in the substrate 5a in the related art, after the wiring pattern 52a is provided using a conductor such as the copper foil, the resist layer 54a is formed using an insulating resist ink, and thereafter, a gold (Au) plating layer 53a is provided for corrosion prevention or the like in a portion where the resist layer 54a is not provided and the wiring pattern 52a is exposed to the outside.

In contrast, in the substrate 5 according to the present embodiment, as illustrated in FIG. 8, a gold plating layer 53 is disposed on the wiring pattern 52 made of the conductor such as the copper foil, and a resist layer 54 that allows at least the gold plating layer 53 to be transparent or semi-transparent is provided over the gold plating layer 53. That is, the gold plating layer 53 is visible through the resist layer 54.

The resist layer 54 generally has a deep green color tone, but by disposing the gold plating layer 53 between the wiring pattern 52 and the resist layer 54, the gold plating layer 53 is visible through the resist layer 54 and a color tone of the substrate 5 can be brightened as compared with a case where the resist layer 54 is directly placed on the wiring pattern 52. A resist ink for forming the resist layer 54 may have a bright color such as yellow or white. The overall visibility of the substrate 5 when the inside of the timepiece 200 is viewed through the display device 1 including the liquid crystal panel 2 and the like can also be improved by changing the color of the resist layer 54 itself to a bright color.

As illustrated in FIGS. 2 and 3, the main IC (integrated circuit) 56 is mounted on the substrate 5 according to the present embodiment, and a light-shielding cover 7 is disposed at a position corresponding to the main IC (integrated circuit) 56 to cover the main IC (integrated circuit) 56.

The integrated circuit is extremely sensitive to external light such as ultraviolet light, and minimal light ingress may cause a malfunction, an increase in current consumption, or other issues. Therefore, among the electronic components mounted on the substrate 5, at least the main IC (integrated circuit) 56 is provided with the light-shielding cover 7 to shield external light.

The light-shielding cover 7 needs only be sufficient to shield external light such as ultraviolet light, and a material for forming the light-shielding cover 7 is not particularly limited.

In addition, a size, a shape, and a coverage area of the light-shielding cover 7 need only be sufficient to cover the main IC (integrated circuit) 56. For example, the light-shielding cover 7 may be a plate-shaped cover that covers a viewing side of the main IC (integrated circuit) 56, or may be a cover that covers the main IC (integrated circuit) 56 to surround the viewing side and side surfaces. Potting or the like applied to the main IC (integrated circuit) 56 may also be covered and hidden by the light-shielding cover 7. If the potting or the like is hidden, designability when viewed from the outside is improved.

In addition, from a viewpoint of making an internal configuration of the substrate 5 and the like visible from the outside, it is preferable that the light-shielding cover 7 covers a range slightly larger than the main IC (integrated circuit) 56 and does not cover and hide members, which do not require light shielding, such as the wiring pattern 52 as much as possible.

An arrangement position of the light shielding cover 7 depends on an arrangement position of the main IC (integrated circuit) 56 or the like to be shielded from light, and for example, in examples illustrated in FIGS. 1 to 3, the light-shielding cover 7 is disposed substantially at the center of the substrate 5. When the light-shielding cover 7 is disposed at a position where the light-shielding cover 7 is particularly noticeable when the substrate 5 is viewed through the liquid crystal panel 2, it is preferable that the light-shielding cover 7 has excellent designability.

Therefore, for example, the light-shielding cover 7 may be made of a metal such as gold or plated with gold or the like. In addition, a surface (a viewing side surface) of the light-shielding cover 7 may be decorated with various patterns, logos, or engravings to further improve design quality and designability.

### [Operation]

When assembling the timepiece 200, the module 100, which is the electronic apparatus including the display device 1, is first assembled.

As illustrated in FIG. 8, in the substrate 5 provided in the module 100, a layer of the conductor such as copper foil ("Cu layer" in FIG. 8) is provided on the base material 51 (front and back surfaces and side surfaces of the base material 51 in FIG. 8), and the gold plating layer 53 ("Au layer" in FIG. 8) is formed by performing gold plating or the like on the conductor. Thereafter, etching or the like is performed according to a wiring circuit, and wiring patterning is performed such that only the wiring pattern 52 portion ("Cu layer") and the gold plating layer 53 ("Au layer") remain. Thereafter, the resist layer 54 is formed over the "Cu layer" and the gold plating layer 53.

Accordingly, the gold plating layer 53 ("Au layer") is visible through the resist layer 54 in the wiring pattern 52 portion, and the wiring pattern 52 portion including the Cu layer appears bright. The color tone of the entire substrate 5 can be brightened, and good transmittance/visibility can be ensured even when viewed through the display device 1 including the liquid crystal panel 2 and the like. Portions such as a peripheral portion of a surface of the substrate 5, which do not affect the electronic components or wiring, may be decorated with various patterns, logos, engravings, and the like.

After the wiring pattern 52 and the like are provided on the substrate 5, the electronic component such as the main integrated circuit (IC) 56 is mounted at a predetermined position on the substrate 5 (for example, a central portion of the viewing side surface of the substrate 5).

Then, the light-shielding cover 7 is disposed only at a position corresponding to an electronic component, which requires light shielding, such as the main IC (integrated circuit) 56. The light-shielding cover 7 may be plated on its surface (the viewing side surface), or may be decorated with various patterns, logos, engravings, or the like. For example, in the examples illustrated in FIGS. 1 and 2, star-shaped marks are provided as a decoration on the viewing side surface of the light-shielding cover 7.

Next, the display device 1 including the transmissive liquid crystal panel 2 is assembled.

The backlight unit 4 of the display device 1 is implemented by attaching the light guide plate 42, which is formed by injection molding the transparent resin, to the frame 41 and disposing the light source 43 at one end of the frame 41.

In order to cause the backlight unit 4 to emit light across its surface, the dot pattern is formed on the entire surface of the light guide plate 42. However, when the number of dot patterns is large, the light guide plate 42 has a frosted-glass appearance, and when the inside is viewed through the display device 1, the transmittance/visibility of an internal structure (for example, the substrate 5) on a back side (a non-viewing side) of the backlight unit 4 are reduced, for example, the substrate 5 appears blurred. In particular, when the dot pattern is varied in density between a portion close to the light source 43 and a portion far from the light source 43 as in the related art, unevenness occurs in the internal transmittance and in the visibility of the substrate 5 or the like between a side where the dots are densely provided and a portion where the dots are sparsely provided.

Therefore, in the dot pattern of the light guide plate 42 according to the present embodiment, a dot pitch is substantially uniform as a whole while maintaining the dot size, and the density of the dots is constant regardless of the distance from the light source 43. Since the dot pattern of the light guide plate 42 is substantially uniform as a whole, unevenness in the transmittance does not occur when the inside of the timepiece 200 is viewed through the display device 1 including the light guide plate 42.

Accordingly, it is possible to improve the transmittance of the light guide plate 42 to improve the transmittance/visibility of the internal structure such as the substrate 5 while maintaining a function of the backlight unit 4 that causes the surface-emitted light to be incident on the liquid crystal panel 2.

The liquid crystal panel 2 of the display device 1 has a configuration in which the upper polarizing plate 25 is disposed on the liquid crystal layer 20, the lower polarizing plate 26 is disposed under the liquid crystal layer 20, sandwiching the liquid crystal layer 20 from both sides.

The "iodine-based transmissive polarizing plate" is used as the lower polarizing plate 26 among polarizing plates. Accordingly, a lit color of the lighting pattern portion to be lit and displayed on the liquid crystal panel 2 is black, and the background is transparent, so that both the transmittance of the background and the display contrast on the liquid crystal panel 2 can be implemented. Therefore, the visibility of a display on the display device 1 is improved.

Further, the film 3 having the moth-eye structure is disposed on a lower surface (a non-viewing side surface) side of the lower polarizing plate 26. At this time, the MD direction of the film 3 during sheet manufacturing is oriented at 45 degrees with respect to the polarizing axis ("Pa" in FIG. 6) of the upper polarizing plate 25.

The light guide plate 42 of the backlight unit 4 is manufactured by injection molding as described above, and when the light guide plate 42 is viewed through the polarizing plates (the upper polarizing plate 25 and the lower polarizing plate 26), a rainbow pattern (optical distortion) appears in the appearance due to internal stress (residual stress) generated during the molding.

In this regard, the film 3 having the moth-eye structure has a property that linearly polarized light becomes a state close to natural light of unpolarized light (with random orientations) when passing through the film 3. Therefore, by disposing the film 3 on the lower surface (the non-viewing side surface) side of the lower polarizing plate 26 such that the MD direction of the film 3 during sheet manufacturing is oriented at 45 degrees with respect to the polarizing axis Pa of the upper polarizing plate 25, it is possible to reduce the rainbow pattern (the optical distortion) appearing in the appearance due to the internal stress (the residual stress) of the light guide plate 42.

After the backlight unit 4 is disposed on the non-viewing side of the liquid crystal panel 2 assembled as described above and the display device 1 is completed, the connection portion 24 of the transparent electrode of the liquid crystal panel 2 and the connection terminal portion 55 of the substrate 5 are connected via the connector member 6.

Further, the display device 1 and the substrate 5 are sandwiched between the first housing 101 and the second housing 102, and the substrate pressing member 103 is attached to integrate these components. Then, the battery 104 is locked to the non-viewing side of the second housing 102 by the battery pressing member 105, and the module 100 is completed.

In the present embodiment, the timepiece 200 is completed by accommodating the module 100 in the exterior case 201.

Accordingly, when the timepiece 200 is viewed from the viewing side, the internal structure such as the substrate 5 can be viewed through the display device 1 including the liquid crystal panel 2 and the like. In addition, a display of the time and the like displayed on the liquid crystal panel 2 can also be clearly viewed.

### [Effects]

As described above, the display device 1 according to the present embodiment includes the transmissive liquid crystal panel 2 including the liquid crystal layer 20 in which the liquid crystal material 21 is sandwiched between the transparent electrodes, the upper polarizing plate 25 disposed on the viewing side of the liquid crystal layer 20, and the lower polarizing plate 26 disposed on the non-viewing side of the liquid crystal layer 20, and the film 3 having the moth-eye structure is disposed on the non-viewing side surface of the lower polarizing plate 26.

The light guide plate 42 of the backlight unit 4 provided on the non-viewing side of the liquid crystal panel 2 is formed by injection molding the transparent resin. Therefore, when the light guide plate 42 is viewed through the polarizing plates (the upper polarizing plate 25 and the lower polarizing plate 26), the rainbow pattern (the optical distortion) appears in the appearance due to the internal stress (the residual stress) generated during the formation.

**In** this regard, by providing the film 3 having the moth-eye structure, the occurrence of the rainbow pattern (the optical distortion) can be prevented to an unnoticeable level when viewed, and the visual appeal and exterior quality of the display device 1 are improved. Accordingly, when the transmissive liquid crystal panel 2 is provided, the visibility of the internal structure disposed below the liquid crystal panel 2 can be improved.

**In** addition, the film 3 according to the present embodiment is cut out from the long sheet 30, and is disposed such that a longitudinal direction of the long sheet is oriented at 45 degrees with respect to the polarizing axis Pa of the upper polarizing plate 25.

Accordingly, when the film 3 having the moth-eye structure is disposed, it is possible to effectively prevent the occurrence of the rainbow pattern (the optical distortion) due to the internal stress (the residual stress) generated during the injection molding of the light guide plate 42.

The display device 1 includes, on the non-viewing side of the liquid crystal panel 2, the backlight unit 4 including the light source 43 and the light guide plate 42, and a uniform dot pattern is formed on the light guide plate 42 of the backlight unit 4 regardless of the distance from the light source 43. **In** particular, in the present embodiment, the liquid crystal panel 2 is the transmissive liquid crystal panel.

Accordingly, when the internal structure such as the substrate 5 is viewed through the display device 1 including the light guide plate 42, the entire transmittance is constant, and the internal structure is easily viewed without unevenness.

The display device 1 according to the present embodiment includes the substrate 5 disposed on the non-viewing side of the liquid crystal panel 2, and the substrate 5 is provided with a plating layer (the gold plating layer 53 according to the embodiment) on the viewing side of the wiring pattern 52 formed on the base material 51.

The resist layer 54 is provided on at least a partial region of the plating layer on the viewing side (the gold plating layer 53 according to the embodiment), and the plating layer (the gold plating layer 53) is visible through the resist layer 54.

The plating layer (the gold plating layer 53 according to the embodiment) may be provided across an entire width of the wiring pattern 52 on the viewing side, and the resist layer 54 may be provided to cover at least a portion of the plating layer (the gold plating layer 53) in a width direction of the wiring pattern 52).

**In** this way, when the gold plating layer 53 is formed corresponding to the wiring pattern 52 formed on the base material 51, and the resist layer 54 that allows at least the gold plating layer 53 to be transparent or semi-transparent is provided over the gold plating layer 53, the gold plating layer 53 is disposed under the resist layer 54 at least in a portion where the wiring pattern 52 is formed.

Since the gold plating layer 53 is visible through the resist layer 54, the color tone of the entire substrate 5 is brightened, and when the display device 1 includes the transmissive liquid crystal panel 2, the transmittance is excellent when the internal structure such as the substrate 5 disposed below the liquid crystal panel 2 is viewed through the liquid crystal panel 2 or the like. Therefore, when the display device 1 is viewed from the viewing side, the internal structure such as the wiring pattern 52 formed on the substrate 5 can be clearly viewed below the liquid crystal display such as the time display, and the functional beauty of the wiring pattern 52 can be enjoyed visually.

Further, since the color tone of the entire substrate 5 is brightened, the visibility of the display on the liquid crystal panel 2 is also improved.

The main IC (integrated circuit) 56 is mounted on the substrate 5 according to the present embodiment, and the light-shielding cover 7 is disposed only at a position corresponding to the main IC (integrated circuit) 56 on the substrate 5 to cover the main IC (integrated circuit) 56.

The main IC (integrated circuit) 56 is sensitive to the external light such as ultraviolet light, and exposure to the external light may cause malfunctions or other issues. When the substrate 5 is visibly disposed below the transmissive liquid crystal panel 2, an influence of the external light on the main IC (integrated circuit) 56 on the substrate 5 increases.

In this regard, by shielding the main IC (integrated circuit) 56 from light by the light-shielding cover 7, it is possible to protect the main IC (integrated circuit) 56 on the substrate 5 from the external light and avoid the occurrence of defects such as malfunction even in a configuration in which the substrate 5 can be viewed through the liquid crystal panel 2.

The light-shielding cover 7 according to the present embodiment may be decorated on the viewing side.

In this case, the decoration applied to the light-shielding cover 7 can be enjoyed when the substrate 5 is viewed through the transmissive liquid crystal panel 2, and the designability is excellent.

When the electronic apparatus such as the module 100 includes the display device 1 according to the present embodiment, the internal structure such as the substrate 5 can be viewed through the transmissive liquid crystal panel 2, and the functional beauty of, for example, the wiring pattern 52 formed on the substrate 5 can be enjoyed as the appearance.

In addition, even when the timepiece 200 includes the display device 1 according to the present embodiment, the internal structure such as the substrate 5 can be viewed through the transmissive liquid crystal panel 2, and it is possible to produce the timepiece 200 having excellent designability, in which the functional beauty of the wiring pattern 52 or the like can be enjoyed as the appearance.

### (Modification)

Although the embodiment of the present invention has been described above, the present invention is not limited to the embodiment, and various modifications can be made without departing from the gist thereof.

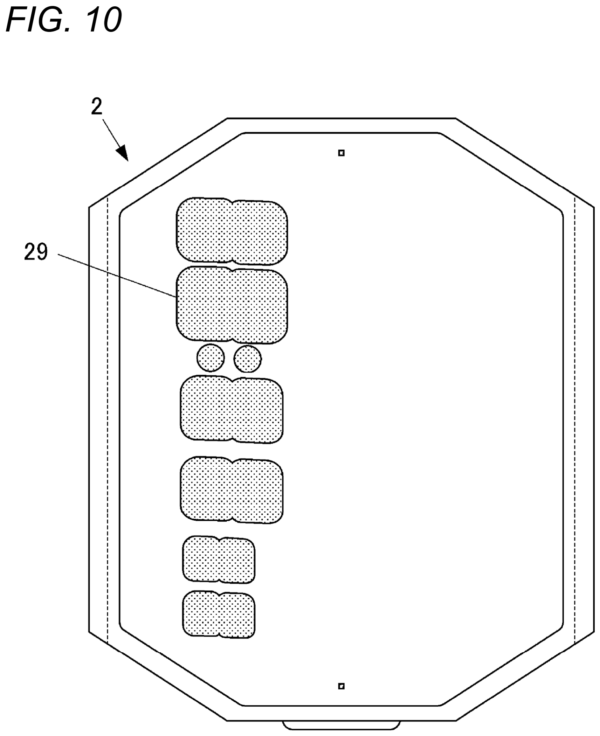

For example, as illustrated in FIG. 10, a transmissive printed portion 29 may be provided on the transparent substrate 22 or the like of the liquid crystal panel 2 in correspondence with the lighting pattern portion (not illustrated) of the liquid crystal panel 2.

That is, when the substrate 5 or the like disposed below (on the non-viewing side of) the liquid crystal panel 2 using the transmissive liquid crystal panel 2 is viewed as the appearance of the display device 1 (and the module 100 including the display device 1 or the timepiece 200), transmissive printing is performed on a portion corresponding to the lighting pattern portion or the periphery thereof in a color tone different from the lit color when the lighting pattern portion is lit (the color tone when the lighting pattern portion is lit, for example, black in the present embodiment) such that the background transmits light.

By providing the transmissive printed portion 29 in this way, the color tone of the periphery of the lighting pattern portion can be stabilized, and contrast between a background of the periphery of the lighting pattern portion and the display (lit color) on the lighting pattern portion can be improved, which is expected to improve the visibility of the time display or the like displayed on the lighting pattern portion.

The transmissive printed portion 29 is not limited to being provided by printing on the transparent substrate 22 or the like. For example, the transmissive printed portion 29 may be disposed by adhering a film having a color tone different from the lit color (for example, black) on the lower surface (non-viewing side surface) of the liquid crystal panel 2 or the like.

In the present embodiment, when the transmissive liquid crystal panel 2 is provided, the structure of the surface of the substrate 5 is exemplified as the internal structure disposed below the liquid crystal panel 2, but the internal structure that can be viewed through the liquid crystal panel 2 is not limited to the structure of the surface of the substrate 5.

In the substrate 5 according to the present embodiment, the gold plating layer 53 is disposed on the wiring pattern 52, but the configuration is not limited thereto. For example, plating may be performed with a material other than gold, for example, a silver plating layer may be disposed on the wiring pattern 52.

Even when the transmissive liquid crystal panel 2 according to the present embodiment is not present, the visibility can be improved when the substrate 5 is viewed through, for example, a colored back cover that transmits light or a colored transmissive member on the viewing side.

In the present embodiment, a case where the module 100, which is the electronic apparatus including the display device 1, is applied to the timepiece 200 has been exemplified, but the electronic apparatus is not limited to the module of the timepiece.

The display device 1 can be applied to any apparatus in which the transmissive liquid crystal panel 2 is incorporated to perform various displays, and can be widely applied to the electronic apparatus that displays the time or various data, such as various smart watches and sports watches, as well as heart rate monitors, blood pressure monitors, and the like.

Although some embodiments of the present invention have been described above, the scope of the present invention is not limited to the above-described embodiments, and includes the scope of the invention defined by the claims and the equivalents thereof.

The present application is based on a Japanese Patent Application (Japanese Patent Application No. 2023-89623) filed on May 31, 2023, and contents thereof are incorporated herein by reference.

### INDUSTRIAL APPLICABILITY

According to the present disclosure, it is possible to provide a display device, an electronic apparatus, a timepiece, a method for manufacturing the display device, and the like, which can improve visibility of an internal structure disposed below a liquid crystal panel when a transmissive liquid crystal panel is provided.

### REFERENCE SIGNS LIST

1: Display device
2: Liquid crystal panel
20: Liquid crystal layer
21: Liquid crystal material
22: Transparent substrate
23: Sealant
24: Connection portion
25: Upper polarizing plate
26: Lower polarizing plate
29: Transmissive printed portion
3: Film having moth-eye structure
4: Backlight unit
41: Frame
42: Light guide plate
43: Light source
5: Substrate
52: Wiring pattern
53: Gold plating layer
54: Resist layer
55: Connection terminal portion
56: Main IC (integrated circuit)
6: Connector member
7: Light-shielding cover
100: Module (electronic apparatus)
101: First housing
102: Second housing
103: Substrate pressing member
103a: Locking claw portion
104: Battery
105: Battery pressing member
200: Timepiece
201: Exterior case (case)
202: Band attachment portion
D: Viewing direction
Pa: Polarizing axis

## Claims

1. A display device comprising:
a transmissive liquid crystal panel including a liquid crystal layer in which a liquid crystal material is sandwiched between transparent electrodes, an upper polarizing plate disposed on a viewing side of the liquid crystal layer, and a lower polarizing plate disposed on a non-viewing side of the liquid crystal layer,
wherein a film having a moth-eye structure is disposed on a non-viewing side surface of the lower polarizing plate.

2. The display device according to claim 1, wherein the film is cut out from a long sheet, and is disposed such that a longitudinal direction of the long sheet is oriented at 45 degrees with respect to a polarizing axis of the upper polarizing plate.

3. The display device according to claim 1, further comprising:
a backlight unit including a light source and a light guide plate, on a non-viewing side of the liquid crystal panel,
wherein a uniform dot pattern is formed on the light guide plate of the backlight unit regardless of a distance from the light source.

4. A display device comprising:
a transmissive liquid crystal panel; and
a backlight unit disposed on a non-viewing side of the liquid crystal panel and including a light source and a light guide plate,
wherein a uniform dot pattern is formed on the light guide plate of the backlight unit regardless of a distance from the light source.

5. The display device according to claim 4,
wherein the liquid crystal panel includes a liquid crystal layer in which a liquid crystal material is sandwiched between transparent electrodes, an upper polarizing plate disposed on a viewing side of the liquid crystal layer, and a lower polarizing plate disposed on a non-viewing side of the liquid crystal layer, and
wherein a film having a moth-eye structure is disposed on a non-viewing side surface of the lower polarizing plate.

6. The display device according to claim 5, wherein the film is cut out from a long sheet, and is disposed such that a longitudinal direction of the long sheet is oriented at 45 degrees with respect to a polarizing axis of the upper polarizing plate.

7. The display device according to claim 1 or 4, further comprising:
a substrate disposed on the non-viewing side of the liquid crystal panel,
wherein the substrate is provided with a plating layer on a viewing side of a wiring pattern formed on a base material.

8. The display device according to claim 7,
wherein a resist layer is provided on at least a partial region of the plating layer on a viewing side, and
wherein the plating layer is visible through the resist layer.

9. The display device according to claim 8,
wherein the plating layer is provided across an entire width of the wiring pattern on the viewing side, and
wherein the resist layer is provided to cover at least a portion of the plating layer in a width direction of the wiring pattern.

10. The display device according to claim 7,
wherein an integrated circuit is mounted on the substrate, and
wherein a light-shielding cover is disposed only at a position corresponding to the integrated circuit on the substrate to cover the integrated circuit.

11. The display device according to claim 10, wherein the light-shielding cover is decorated on a viewing side.

12. An electronic apparatus comprising:
the display device according to claim 1 or 4.

13. A timepiece comprising:
the display device according to claim 1 or 4; and
a case configured to accommodate the display device.

14. A method for manufacturing a display device, comprising:
a first step of forming a wiring pattern on a base material;
a second step of forming a plating layer corresponding to the wiring pattern after the first step; and
a third step of forming a resist layer on at least a portion of the plating layer after the second step.
